# NOUVEAU FASCICULE DE BREVET EUROPEEN

(11) **EP 0 479 677 B2**
(45) Date de publication et mention de la décision concernant l'opposition: **10.11.1999**
(45) Mention de la délivrance du brevet: 20.03.1996
(21) Numéro de dépôt: 91402633.1
(22) Date de dépôt: 03.10.1991
(51) Int. Cl.: B29C 47/02, B29C 70/00, B29C 47/12

(54) **Dispositif pour former un jonc extrude à la périphérie d'une feuille de verre**
Vorrichtung um ein Formteil am Rand einer Glasscheibe anzuformen
Device to form a molded joint at the edge of a window pane

(30) Priorité: 04.10.1990 DE 4031236
(43) Date de publication de la demande: 08.04.1992
(73) Titulaire: SAINT-GOBAIN VITRAGE, 92400 Courbevoie (FR); VEGLA Vereinigte Glaswerke GmbH, 52066 Aachen (DE)
(72) Inventeur: Scholl, Heinz, W-5180 Eschweiler (DE); Friedrich, Hans-Georg, W-5102 Würselen (DE); Hammes, Friedhelm, W-5120 Herzogenrath (DE)
(74) Mandataire: Muller, René

(56) Documents cités:
- EP-A- 0 444 998
- FR-A- 2 543 486
- FR-A- 2 597 026
- US-A- 3 093 860
- US-A- 4 584 150
- US-A- 4 983 113
- PATENT ABSTRACTS OF JAPAN vol. 3, no. 37 (C-41)29 Mars 1979 & JP-A-54 011 168 (YOKOHAMA GOMU K.K.) 27 Janvier 1979

## Description

L'invention concerne un procédé pour former un profilé constitué d'un polymère extrudable, directement sur la surface d'un objet, en particulier au bord d'un vitrage, à sa périphérie, à l'aide d'une tête d'extrusion comportant une sortie de forme adaptée pour le profilé et une chambre placée juste avant la sortie, ainsi qu'il ressort du préambule de la revendication 1.

Il est connu d'équiper des vitrages automobiles avec un profilé en forme de cadre fait d'un polymère. Ce profilé constitué d'une matière extrudable est déposé à l'aide d'une buse d'extrusion directement sur la surface du verre qui a été éventuellement préparée à cet effet (demande de brevet EP-121 479 A ; EP-121 480 A ; EP-121 481 A ; EP-256 946 A; EP-258 128 A ; EP-298 788 A ; EP-307 317 A ; EP-345 134 A).

Le profilé extrudé durcit ensuite et peut être utilisé à différentes fonctions. Il peut par exemple constituer un intercalaire sur lequel on déposera un boudin de colle avant de procéder au collage du vitrage dans la baie. Dans ce cas le profilé aura avantageusement la forme d'un canal. Un profilé du même type peut être utilisé plus simplement pour constituer une barrière qui limitera l'expansion du boudin de colle au moment du montage et évitera sa pénétration dans la partie visible du parebrise. Le joint profilé peut également servir de butée qui, au moment où l'on positionne le vitrage dans la baie, lui permet de s'appuyer et permet ainsi de positionner et de fixer le vitrage en attendant la prise de la colle. Enfin, un profilé extrudé du type précédent peut avoir une excroissance en forme de lèvre qui déborde de la périphérie du vitrage et qui permet lorsqu'il vient en appui sur la carrosserie de boucher la fente entre le vitrage et le bord de la baie.

Un joint profilé extrudé à la périphérie d'un vitrage peut également remplir simultanément plusieurs fonctions. C'est ainsi qu'un profilé particulièrement utile est constitué par exemple d'une base relativement large en forme de canal et d'une extension en forme de lèvre qui s'étend au-delà de la périphérie du vitrage. Dans ce cas, la base du profilé sert de support au boudin de colle qui fixera le pare-brise dans la baie tandis que la lèvre périphérique réalise le centrage du vitrage dans cette même baie au moment de la pose dans la carrosserie. Dans ce cas, cette même lèvre sert également à l'étanchéité entre le verre et le métal et participe à l'esthétique de l'ensemble. Un vitrage prééquipé d'un tel jonc profilé est de plus en plus utilisé dans la pratique (voir par exemple Karl-Heinz-Brück : 〈〈 Fahrzeugverglasung 〉〉, Verlag Vieweg 1990).

La tête d'extrusion avec sa buse est manoeuvrée par un robot. Elle est placée à la périphérie du vitrage puis déplacée le long de son bord. Au cours de ce déplacement un microprocesseur adapté commande un dispositif de dosage du polymère en cours d'extrusion.

Dans la majorité des cas, le procédé que l'on vient de décrire permet d'équiper sur toute la périphérie du vitrage d'un cadre qui a partout la même section. Cependant il existe des cas où l'on souhaite disposer de vitrages équipés de cadres qui ont des sections différentes sur une partie ou sur une autre de leur périphérie. C'est ainsi par exemple que des vitrages automobiles seront souvent équipés sur leur partie horizontale inférieure d'un simple profil avec une section en U tandis que les côtés et la partie horizontale supérieure auront un profilé extrudé équipé lui, d'une lèvre qui déborde de la périphérie du vitrage. Un tel cadre nécessitait jusqu'à présent deux phases de production séparées où une première buse d'extrusion dépose la première partie du cadre puis où une deuxième buse, au cours de la deuxième phase, procède au dépôt des autres parties, différentes.

Dans l'art antérieur, on connaît des méthodes pour extruder des profilés dont la section varie, ainsi la demande de brevet FR-A-2 597 026 propose de modifier une filière, destinée à extruder une plaque alvéolaire, en déplaçant devant l'orifice de sortie une plaque métallique. Mais cette technique appartient à un domaine différent et à la différence de la buse d'extrusion utilisée pour mettre en oeuvre le procédé de l'invention, qui ne possède, elle, sur son canal de sortie que trois côtés, le quatrième étant constitué par la surface du support, la filière de l'antériorité est traditionnelle.

De plus rien n'est prévu, dans l'antériorité pour choisir la section du profilé en fonction de l'endroit où il sera déposé.

L'invention se donne pour tâche de réaliser un dispositif capable d'extruder à l'aide de la même tête des profilés de sections différentes.

Selon l'invention, ce but est atteint en formant un profilé fait d'un polymère par extrusion directement sur la surface d'un objet, en particulier au bord de la surface d'un vitrage le long de son périmètre, en déplaçant à la périphérie de l'objet une tête d'extrusion comportant une sortie latérale et un orifice calibré, la tête d'extrusion comportant une chambre de répartition en amont de la sortie, un robot guidant la tête d'extrusion, un doseur régulant le débit du polymère à la tête d'extrusion, un microprocesseur commandant le trajet de la tête d'extrusion et le profilé possédant une section différente selon l'endroit de la périphérie où il est formé; dans le procédé de l'invention, l'orifice calibré est constitué d'une part, par la surface de l'objet et d'autre part, au moins partiellement et au moins en certains endroits de la périphérie de l'objet, par le bord d'une plaque mobile dans son plan, de manière à pouvoir obturer partiellement la sortie et la position de ladite plaque et le débit du polymère à la tête d'extrusion sont détermines par la position de la tête d'extrusion à la périphérie de l'objet.

Dans une première variante de l'invention, la plaque mobile est un coulisseau en déplacement rectiligne dans un plan sensiblement perpendiculaire à la surface de l'objet et qui obture des parties plus ou moins importantes de la sortie. De préférence, c'est un microprocesseur qui commande le déplacement du coulisseau en fonction de la position de la tête d'extrusion à la périphérie de l'objet et il commande simultanément le débit du polymère extrudé grâce à un doseur. La plaque mobile placée devant la sortie calibrée peut ainsi par exemple grâce à un vérin être déplacée d'une position à une autre pendant un court arrêt de la tête d'extrusion. De cette manière on peut obtenir une modification de la section du profilé à un endroit précis de la course de la tête d'extrusion. Il est également possible au lieu du système précédent d'obtenir que la plaque possède un mouvement tel qu'elle se déplace de manière continue pendant le déplacement de la tête d'extrusion. De cette manière, on peut obtenir des sections de profilé qui varient continûment sur de grandes longueurs.

Dans une autre variante du dispositif conforme à l'invention, la plaque mobile est un disque équipé à sa périphérie d'orifices ouverts dont les bords engendrent la partie libre du profilé et qui, par suite de pivotements définis du disque autour de son axe, occupent alternativement l'emplacement situé immédiatement en aval de la sortie. De préférence, c'est un microprocesseur qui commande le pivotement du disque en fonction de la position de la tête d'extrusion à la périphérie de l'objet et qui commande simultanément le débit du polymère grâce à un doseur.

Les diverses variantes du dispositif de l'invention sont représentées dans les dessins qui permettront de les décrire en détail.

Parmi ceux-ci on trouve successivement :
Fig. 1 : une buse d'extrusion avec un coulisseau mobile en vue latérale,
Fig. 2 : vue partielle de la fig. 1 avec l'ouverture complètement dégagée,
Fig. 3 : vue partielle de la fig. 1 avec la sortie partiellement obstruée,
Fig. 4 : vue partielle de la fig. 1 avec le coulisseau encore plus avancé,
Fig. 5 : vitrage automobile équipé d'un cadre dont les profilés ont des sections différentes,
Fig. 6 : représentation fonctionnelle lors de la mise en oeuvre du dispositif de la figure 1,
Fig. 7 : tête d'extrusion équipée d'une plaque avec plusieurs sorties calibrées.

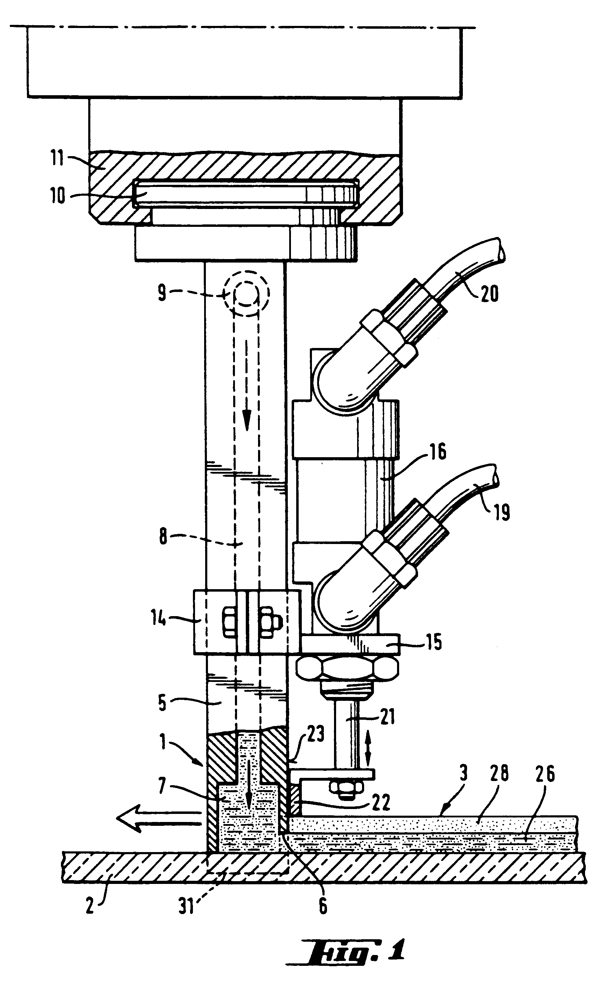

Une première réalisation de base de la tête d'extrusion conforme à l'invention dans laquelle c'est la buse elle-même qui possède une sortie calibrée est donc représentée dans les figures 1 à 4. La tête d'extrusion 1 permet de déposer à la périphérie d'un vitrage automobile 2 un profilé 3 en un polymère extrudable, par exemple un polyuréthane monocomposant polymérisant à l'humidité. Il est déposé directement sur le vitrage 2 et la tête d'extrusion 1 est déplacée par le bras d'un robot le long du bord du vitrage 2.

Dans le dispositif représenté on trouve la tête d'extrusion 1 dont la buse 5 est équipée d'une sortie calibrée 6 dans sa partie latérale inférieure. On trouve également une chambre de répartition 7 qui précède la sortie 6 et un canal 8 qui est relié au raccord d'approvisionnement 9. Celui-ci est alimenté par un tuyau non représenté. Le polymère dosé par un dispositif adapté est amené avec un débit contrôlé dans la tête d'extrusion. La buse 5 est équipée d'un épaulement en forme d'anneau 1, qui est lui-même monté à l'intérieur d'un support 11 lié au bras d'un robot.

La buse 5 porte une fixation 14 qui supporte elle-même une console 15, à laquelle est fixé un vérin pneumatique 16 dont l'axe est parallèle à celui de la buse 5. Le vérin 16 est alimenté grâce à une vanne électropneumatique trois voies non représentée par l'intermédiaire des conduites 19 et 20. A l'extrémité de la tige 21 se trouve un coulisseau 22 qui s'appuie sur la paroi 23 de la buse d'extrusion 5 et qui coulisse éventuellement dans une glissière non représentée.

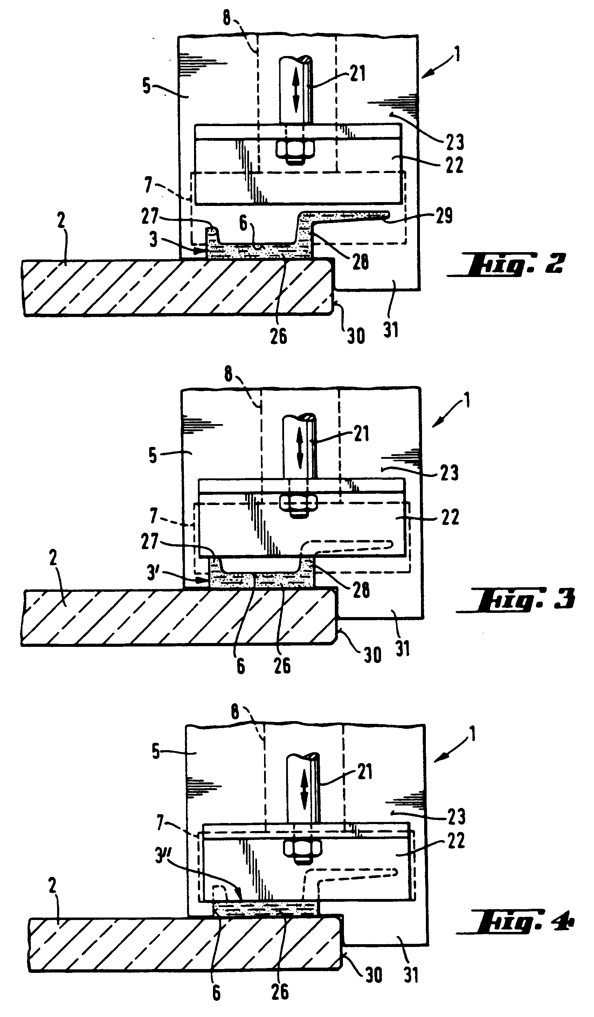

La tige 21 du vérin peut avoir deux ou trois positions fixes comme on l'a représenté en détail sur les figures 2 à 4. Dans sa position fixe supérieure le coulisseau 22 libère complètement la sortie 6. Il s'ensuit que dans cette position du coulisseau 22 la section du profilé 3 qui est extrudé correspond à la surface complète de la sortie 6. Cette surface complète comporte successivement une base 26, une excroissance 27 sensiblement perpendiculaire à la base, cette excroissance 27 étant dirigée du côté du vitrage 2 correspondant à la zone de vision, une excroissance 28 qui est également sensiblement perpendiculaire à la base 26 mais est située du côté de la bordure du vitrage, et enfin, faisant suite à l'excroissance 28, et sensiblement parallèle à la surface du vitrage, une lèvre 29 qui déborde de celui-ci.

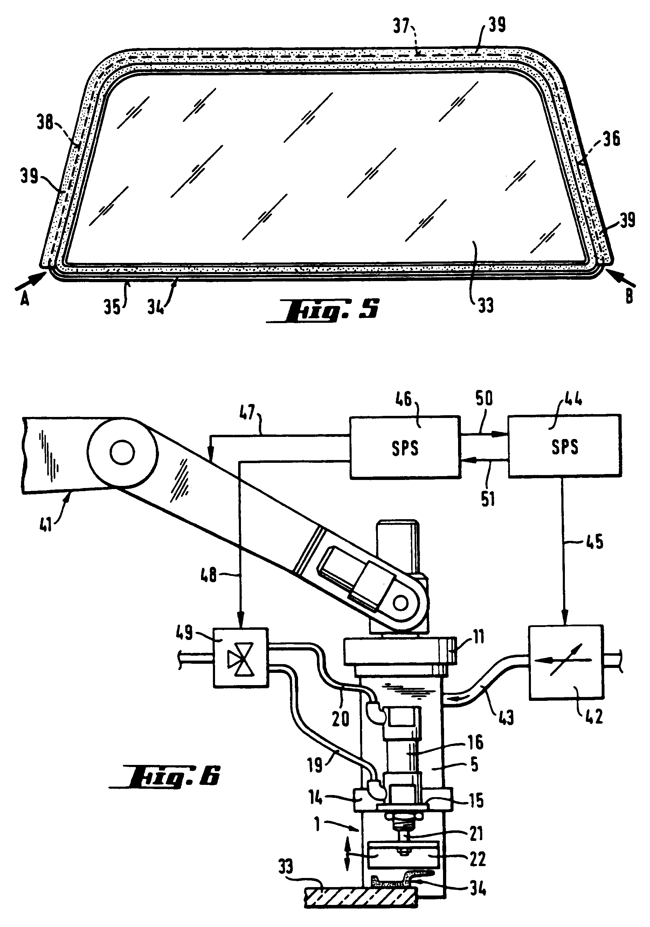

Dans la position du coulisseau 22 représentée figure 3 on voit que la partie supérieure de la sortie calibrée 6 est obturée, c'est celle qui correspond à la lèvre 29. C'est pourquoi dans cette position du coulisseau 22 la section du profilé 3′ qui sera extrudée se limitera à la base 26, à l'excroissance interne 27 et à l'excroissance externe 28.

Lorsque le coulisseau 22 continue à descendre comme représenté figure 4 on voit qu'alors ce sont les parties correspondant aux excroissances 27 et 28 qui sont obturées à leur tour. Il s'ensuit que dans cette position du coulisseau 22 le profilé 3'' a une section qui se limite à la base 26. Pendant l'extrusion, la tête d'extrusion suit le bord du vitrage 2, en effet le guide 31 suit le périmètre 30 du vitrage 2.

La buse d'extrusion qui vient d'être décrite permet d'extruder trois sections de profilé différentes. Du fait que le coulisseau 22 est immobile durant le déplacement de la tête d'extrusion par rapport au vitrage, le profilé que l'on obtient pendant une phase d'extrusion donnée possède une section constante.

La tête d'extrusion qui vient d'être décrite permet pourtant d'obtenir un cadre autour d'un pare-brise avec des sections qui diffèrent d'un endroit à un autre. On a représenté un tel cadre 34 avec deux sections différentes sur la figure 5 où il équipe un vitrage 33. On voit dans ce cas le vitrage 33 et son cadre 34, celui-ci possédant le long du bord inférieur 35 du vitrage une section en forme de U tandis que la section le long des trois autres côtés, 36, 37 et 38 possèdent en plus de la section en U une partie en forme de lèvre 39. Dans ce cas, pendant le déplacement de la tête d'extrusion le long du bord du vitrage, par exemple au moment où celle-ci passe le coin B, elle est arrêtée un bref instant pendant lequel le coulisseau 22 est déplacé.

Il est également possible de modifier la position du coulisseau 22 pendant le déplacement de la tête d'extrusion, un déplacement lent du coulisseau permettant d'obtenir sur une longueur assez grande de profilé un changement de forme de sa section qui soit très progressif.

Le déroulement du procédé d'extrusion permettant de réaliser le cadre de la figure 5 est présenté schématiquement figure 6. La tête d'extrusion 5 avec sa sortie calibrée 6 est conduite par le robot 41 le long du bord du vitrage. Le vérin pneumatique 16 placé sur la buse 5 actionne le coulisseau 22 d'une position supérieure à une position inférieure. Le doseur 42 alimente grâce au tuyau 43 la buse d'extrusion 5 avec un débit ajusté qui dépend de la section du profilé à obtenir. Le doseur 42 est commandé grâce au microprocesseur SPS 44 par la liaison 45. Le robot 41, quant à lui, est commandé grâce à la liaison 47 par le microprocesseur SPS 46. Celui-ci commande également la vanne trois voies 49 par la liaison 48 et par, les liaisons 50, il est relié au microprocesseur 44 qui échange ses informations par la liaison 51 avec le microprocesseur 46 qui commande le robot.

La fonction de la vanne trois voies 49 est de faire passer le coulisseau 22 grâce aux tuyaux 19 et 20 d'une de ses positions à l'autre. Au début d'un cycle d'extrusion, au moment où le vitrage qui doit être équipé de son cadre profilé se présente au poste d'extrusion, le coulisseau 22 est mis en position basse par l'action de la liaison 48. Cette position correspond à celle représentée figure 3. Alors, le robot 41 positionne la tête d'extrusion 5 au point A (figure 5). Celle-ci se déplace alors le long du bord 35 du vitrage 33. Pendant ce déplacement la commande de dosage 44 reçoit de la commande 46 du robot des ordres tels que le doseur 42 fournit un débit de polymère extrudable correspondant à celui qui est nécessaire au segment bas A B du profilé. Dès que la tête d'extrusion 5 dans son déplacement atteint le point B (figure 5), d'une part le mouvement de la tête 5 s'arrête pour un court instant grâce aux ordres reçus par la liaison 47 et d'autre part le coulisseau 22 grâce à un ordre reçu par la liaison 48 est déplacé jusqu'à sa position haute. Simultanément l'ordre est donné par l'intermédiaire de la liaison 5O à la commande 44 du doseur 42 de changer le débit de manière à l'accroître jusqu'à la valeur nécessaire pour continuer l'extrusion. Dès que le changement a eu lieu un ordre est donné par l'intermédiaire de la liaison 51 à la commande 46 du robot 41 pour qu'il continue le processus d'extrusion.

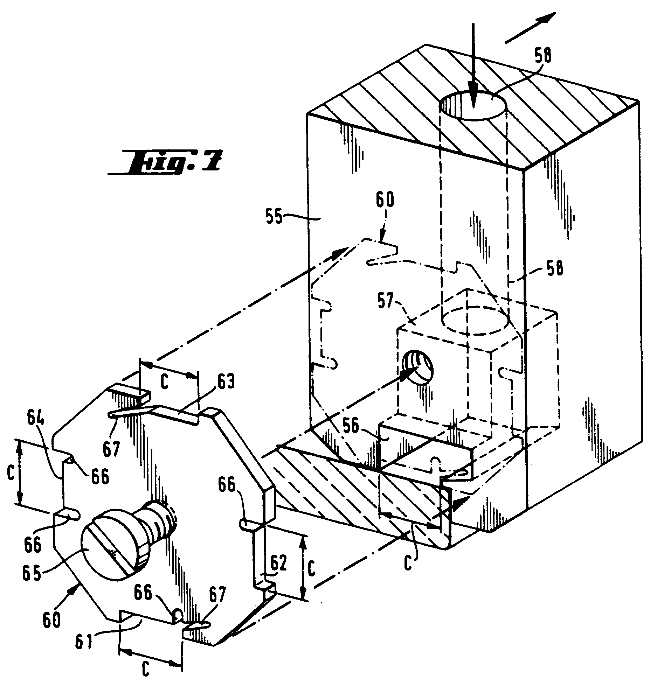

La figure 7 présente dans une vue éclatée un mode de réalisation particulier de la tête d'extrusion conforme à l'invention. Cette tête permet d'extruder quatre profilés de forme différente. La tête d'extrusion 55 comprend une sortie 56 précédée d'une chambre de répartition 57 et d'un canal 58. La sortie 56 n'est cependant pas profilée pour extruder une section définie mais au contraire elle est à l'exception de sa largeur C en bas du profilé, suffisamment grande pour être plus large que tous les profilés. Cette sortie 56 est en contact avec une plaque 6O par exemple en forme de disque, qui comprend, elle, quatre orifices calibrés différents 61, 62, 63 et 64. Cette plaque 60 est fixée sur la tête d'extrusion 55 à l'aide d'une vis 65. La rotation de la plaque 6O de 90° permet de remplacer l'un des orifices calibrés placés devant la sortie 56 par l'un de ceux qui l'avoisinent. Toutes les sections calibrées 61 à 64 possèdent une base qui a la même largeur que la largeur C de la sortie 56 dans sa partie basse. En dehors de cette zone les quatre orifices ont des sections différentes les unes des autres : l'orifice 61 en dehors de sa zone de base possède une fente calibrée 66 qui engendre une excroissance verticale et une fente calibrée 67 pour une lèvre de centrage tandis que l'orifice 62 possède, lui, une seule fente 66 pour une excroissance verticale et l'orifice 63 seulement une fente 67 pour une lèvre de centrage. L'orifice 64 en revanche possède deux fentes 66 calibrées correspondant à deux excroissances verticales.

Il est évident que la buse d'extrusion représentée figure 7 peut être équipée d'un dispositif de réglage de la plaque 60 tel que par exemple un moteur électrique qui lui permet d'effectuer à chaque fois la rotation de 90° appropriée. Une telle buse d'extrusion permet de changer le profil pendant que la buse se déplace le long du vitrage. Dans ce cas le déroulement des phases du procédé est le même que celui représenté figure 6. Ici au moment du passage d'une section de profilé à une autre la tête d'extrusion doit être arrêtée et même légèrement soulevée du vitrage. Dès que la plaque 6O a effectué sa rotation la buse d'extrusion est de nouveau placée au contact du verre et peut recommencer son déplacement le long du bord du vitrage.

## Revendications

1. Procédé pour former un profilé (3) fait d'un polymère par extrusion directement sur la surface d'un objet, en particulier au bord de la surface d'un vitrage (33) le long de son périmètre, en déplaçant à la périphérie de l'objet une tête d'extrusion (1, 55) comportant une sortie latérale (6, 56) et un orifice calibré (6), la tête d'extrusion (1, 55) comportant une chambre de répartition en amont de la sortie, un robot (41) guidant la tête d'extrusion, un doseur (42) régulant le débit du polymère à la tête d'extrusion (1, 55), un microprocesseur (46) commandant le trajet de la tête d'extrusion et le profilé possédant une section différente selon l'endroit de la périphérie où il est formé, **caractérisé en ce que** l'orifice calibré est constitué, d'une part, par la surface de l'objet et, d'autre part, au moins partiellement et au moins en certains endroits de la périphérie de l'objet, par le bord d'une plaque (22, 60) mobile dans son plan, de manière à pouvoir obturer partiellement la sortie (6, 56), **et en ce que** la position de ladite plaque (22, 60) et le débit du polymère à la tête d'extrusion sont déterminés par la position de la tête d'extrusion (1, 55) à la périphérie de l'objet.

2. Procédé selon la revendication 1, **caractérisé en ce que** la plaque mobile est un coulisseau (22) en déplacement rectiligne dans un plan sensiblement perpendiculaire à la surface de l'objet et qui obture des parties plus ou moins importantes de la sortie (6).

3. Procédé selon la revendication 2, **caractérisé en ce qu'**un microprocesseur (46) commande le déplacement du coulisseau (22) en fonction de la position de la tête d'extrusion (1) à la périphérie de l'objet et qu'il commande simultanément le débit du polymère extrudé grâce à un doseur (42).

4. Procédé selon la revendication 1, **caractérisé en ce que** la plaque mobile est un disque (60) équipé à sa périphérie d'orifices ouverts (61, 62, 63, 64) dont les bords engendrent la partie libre du profilé (3) et qui, par suite de pivotements définis du disque autour de son axe, occupent alternativement l'emplacement situé immédiatement en aval de la sortie (56).

5. Procédé selon la revendication 4, **caractérisé en ce qu'**un microprocesseur (46) commande le pivotement du disque (60) en fonction de la position de la tête d'extrusion (1) à la périphérie de l'objet et qu'il commande simultanément le débit du polymère grâce à un doseur (42).

## Claims

1. Method of forming a profile (3), made of a polymer, by extrusion directly onto the surface of an article, in particular onto the edge region of the surface of a pane (33) along its periphery, by displacing along the periphery of the article an extrusion head (1, 55) comprising a lateral outlet (6, 56) and a calibrated orifice (6), the extrusion head (1, 55) comprising a distribution chamber upstream of the outlet, a robot (41) guiding the extrusion head, a metering device (42) regulating the flow rate of the polymer to the extrusion head (1, 55), a microprocessor (46) governing the path of the extrusion head and the profile possessing a section that differs according to the position along the periphery where it is formed, characterized in that the calibrated orifice is constituted, on the one hand, by the surface of the article and, on the other hand, at least partly and at least at certain positions along the periphery of the article, by the edge of a plate (22, 60) movable in its own plane, in such a way that it can partly obturate the outlet (6, 56) and in that the position of said plate (22, 60) and the flow rate of the polymer at the extrusion head are determined by the position of the extrusion head (1, 55) at the periphery of the article.

2. Method according to Claim 1, characterized in that the movable plate is a slider (22) in rectilinear displacement in a plane substantially perpendicular to the surface of the article, which obturates more or less large parts of the outlet (6).

3. Method according to Claim 2, characterized in that a microprocessor (46) controls the displacement of the slider (22) as a function of the position of the extrusion head (1) at the periphery of the article and that it simultaneously controls the flow rate of the extruded polymer by means of a metering device (42).

4. Method according to Claim 1, characterized in that the movable plate is a disc (60), equipped at its periphery with open orifices (61, 62, 63, 64), the edges of which create the free part of the profile (3) and which, as a consequence of defined pivoting movements of the disc about its axis, occupy in turn the position situated immediately downstream of the outlet (56).

5. Method according to Claim 4, characterized in that a microprocessor (46) controls the pivoting of the disc (60) as a function of the position of the extrusion head (1) at the periphery of the article and that it simultaneously controls the flow rate of the polymer by means of a metering device (42).

## Patentansprüche

1. Verfahren zum Formen eines Profils (3) aus einem Polymer durch Extrusion unmittelbar auf der Oberfläche eines Gegenstandes, insbesondere auf dem Randbereich der Oberfläche einer Glasscheibe (33) entlang ihrer Kante, durch Verschieben eines Extrusionskopfes (1,55) am Rand des Gegenstandes, wobei der Extrusionskopf (1,55) einen seitlichen Ausgang (6,56) und eine kalibrierte Öffnung (6) sowie stromaufwärts des Ausgangs eine Verteilerkammer aufweist und von einem Roboter (41) geführt wird, und der dem Extrusionskopf (1,55) zugeführte Volumenstrom von einem Dosierer (42) geregelt und die Bahn des Extrusionskopfes von einem Mikroprozessor (46) gesteuert wird, und das Profil je nach der Stelle auf dem Umfang, an der es gebildet wird, einen unterschiedlichen Querschnitt aufweist, **dadurch gekennzeichnet, daß** die kalibrierte Öffnung einerseits durch die Oberfläche des Gegenstandes und andererseits wenigstens teilweise und wenigstens an bestimmten Stellen des Umfangs des Gegenstandes durch die Kante einer in ihrer Ebene beweglichen Platte (22,60) gebildet wird derart, daß sie den Ausgang (6,56) teilweise verdecken kann **und dadurch, daß** die Stellung der Platte (22,60) und der Volumenstrom des Polymers in den Extrusionskopf durch die Position des Extrusionskopfes (1,55) auf dem Umfang des Gegenstandes bestimmt werden.

2. Verfahren nach Anspruch 1, dadurch gekennzeichnet, daß die bewegliche Platte ein in einer zur Oberfläche des Gegenstandes im wesentlichen senkrechten Ebene geradlinig verschiebbarer Schieber (22) ist, der mehr oder weniger wesentliche Teile des Ausgangs (6) verdeckt.

3. Verfahren nach Anspruch 2, dadurch gekennzeichnet, daß ein Mikroprozessor (46) die Verschiebung des Schiebers (22) in Abhängigkeit von der Position des Extrusionskopfes (1) auf dem Umfang des Gegenstandes, und gleichzeitig den Volumenstrom des extrudierten Polymers mit Hilfe eines Dosierers (42) steuert.

4. Verfahren nach Anspruch 1, dadurch gekennzeichnet, daß die bewegliche Platte eine an ihrem Umfang mit offenen Aussparungen (61,62,63,64) versehene runde Scheibe (60) ist, deren Kanten den freien Teil des Profils (3) bilden und die infolge definierter Drehungen der Scheibe um ihre Achse abwechselnd die Stelle unmittelbar vor dem Ausgang (56) einnehmen.

5. Verfahren nach Anspruch 4, dadurch gekennzeichnet, daß ein Mikroprozessor (46) die Drehung der Scheibe (60) in Abhängigkeit von der Position des Extrusionskopfes (1) auf dem Umfang des Gegenstandes, und gleichzeitig den Volumenstrom des extrudierten Polymers mit Hilfe eines Dosierers (42) steuert.
